# EUROPÄISCHE PATENTSCHRIFT

(11) **EP 1 445 520 B1**
(45) Veröffentlichungstag und Bekanntmachung des Hinweises auf die Patenterteilung: **25.10.2006**
(21) Anmeldenummer: 04002242.8
(22) Anmeldetag: 02.02.2004
(51) Int. Cl.: F16K 11/00

(54) **Ventilanordnung für mindestens zwei fliessfähige Medien**
Valve assembly for at least two fluids
Ensemble soupape pour au moins deux fluids

(30) Priorität: 06.02.2003 DE 10304895; 12.03.2003 DE 10310775
(43) Veröffentlichungstag der Anmeldung: 11.08.2004
(73) Patentinhaber: Dürr Systems GmbH, 70435 Stuttgart (DE)
(72) Erfinder: Baumann, Michael, 74223 Flein (DE); Axmann, Florian, 70376 Stuttgart (DE)
(74) Vertreter: Heusler, Wolfgang

(56) Entgegenhaltungen:
- DE-A- 19 543 548
- DE-A- 19 855 128
- DE-U- 6 751 526
- GB-A- 1 581 608
- US-A- 5 803 109

## Beschreibung

Die Erfindung betrifft eine Ventilanordnung für mindestens zwei fließfähige Medien gemäß dem Oberbegriff der unabhängigen Patentansprüche.

Insbesondere handelt es sich um eine Ventilanordnung für die beiden miteinander zu mischenden Komponenten von Zweikomponenten- oder 2K-Lack, der üblicherweise als Klarlack in einer Anlage zur Serienbeschichtung von Werkstücken wie beispielsweise Fahrzeugkarossen verwendet wird. Die aus Stammlack und Härter bestehenden Komponenten des Klarlacksystems werden in derartigen Anlagen bekanntlich in einer z.B. am Arm eines Lackierroboters montierten Ventilanordnung gemischt und von dort dem Zerstäuber zugeführt (EP 0833694). Die üblicherweise aus Nadelventilen bestehende Ventilanordnung kann neben den Eingangsventilen für Stammlack und Härter eines 2K-Lacksystems verschiedene weitere gesteuerte Ventile enthalten, beispielsweise für ein alternativ verwendbares anderes 2K-Lacksystem und für Reinigungsmedien wie Pulsluft und Verdünner.

Aus der DE 195 43 548 A ist ein von einer speicherprogrammierbaren Steuerung gesteuertes System zum Beschichten von Werkstücken mit 2K-Lack bekannt, bei dem die beiden Lackkomponenten in eine einer Handsprühpistole vorgeschaltete Mischeinheit gepumpt werden, die keine eigenen Ventile enthält. Auch aus der US 5 803 109 ist ein Beschichtungssystem für 2K-Lacke bekannt, in dem Eingangsventile für die beiden Komponenten sich nicht in einer Mischeinheit befinden, sondern in zu der Mischeinheit führenden Eingangsleitungen.

Aus der DE 198 55 128 A ist ein System zum Auftragen einer 2K-Mischung z.B. aus Silikonkautschuk bekannt, deren Komponenten einer an eine Sprühpistole angebauten Mischeinheit zugeführt werden, in der sie über je ein Verstellventil zum Einstellen der Komponentenmenge und über ein Rückschlagventil, das ein Zurückdrängen der Komponente in die Zuleitung der jeweils anderen Komponente verhindert, in einen gemeinsamen Sammelraum fließen.

Bei den in Beschichtungsanlagen für Fahrzeugkarossen bisher üblichen 2K-Ventilanordnungen münden alle vorhandenen Ventile unmittelbar in einen ihnen gemeinsamen zylindrischen Sammelkanal, wobei sich das oder die Härterventile stromaufwärts des oder der Stammlackventile befinden, oder in eine ihnen gemeinsame Mischkammer. In beiden Fällen kann unter Umständen im Betrieb an einem geöffneten anderen Ventil vorbeifließender Härter in dieses Ventil eindringen und es verkleben.

Nachteilig ist bei den bekannten 2K-Ventilanordnungen ferner die Bildung von unerwünschten Toträumen beispielsweise in dem gemeinsamen Sammelkanal zwischen den Eingangsventilen der Komponenten und den außerhalb ihres Strömungsweges liegenden Einmündungsstellen weiterer, während der Komponentenmischung nicht verwendeter Eingangsventile insbesondere für Reinigungsmedien wie Pulsluft und Verdünner.

Bei bekannten Ventilanordnungen mit mehreren quer an einem gemeinsamen zylindrischen Sammelkanal angeordneten Eingangsnadelventilen besteht ein weiteres Problem darin, dass an den Ventilöffnungen zwischen der zylindrischen Kanalwand und dem nicht mit ihr fluchtenden Stirnende der Ventilnadel elliptische Kanten und Hinterschneidungen vorhanden sind, die schlecht spülbar sind und an denen in den Sammelkanal geleitete Lackkomponenten oder andere Flüssigkeiten zum Anbacken neigen. Dieses Problem tritt nicht nur bei 2K-Ventilen auf, sondern auch bei anderen Ventilanordnungen, beispielsweise bei konventionellen Farbwechslern mit zylindrischen Farbkanälen in Beschichtungsanlagen, wie an sich schon in der EP 0979964 erläutert ist. Auch durch derartige Anbackungen können die Ventilfunktionen gestört werden.

Aus DE 6751526 U und DE 578937 A sind Ventilanordnungen für in einer Applikationsvorrichtung miteinander zu mischende Komponenten bekannt, welche durch Eingangsventile enthaltende Kanäle zugeleitet werden, die einander unter Bildung eines Winkels an einem Ausgangskanal treffen, durch den Druckluft zum Applizieren der Mischung geleitet wird. Die Eingangsventile werden manuell betätigt, im Fall der DE 578937 A durch eine aus Skala und Zeiger bestehende Anzeigevorrichtung, bei der durch Verdrehen des Zeigers die Ventile zwangsläufig so gesteuert werden, dass Mischfarben entsprechend dem Farbwert der Skala entstehen.

Auch die Ventile einer aus der GB 1 581 608 A bekannten Mischeinheit, die beispielsweise für Wasserhähne geeignet sind, werden typisch manuell betätigt.

Aufgabe der Erfindung ist, eine programmsteuerbare Ventilanordnung anzugeben, die Störungen der einem gemeinsamen Sammelkanal vorgeschalteten Eingangsventile oder Verbindungskanäle durch in den Sammelkanal geleitete Medien vermeidet.

Diese Aufgabe wird durch die Merkmale des unabhängigen Patentanspruchs gelöst.

Durch die Bildung von Trennstrecken zwischen dem gemeinsamen Sammelkanal und den Ventilen kann insbesondere bei 2K-Ventilanordnungen zuverlässig das Eindringen der einen Komponente, beispielsweise Härter, in den Kanal und das Eingangsventil der anderen Komponente vermieden werden, da die eine Komponente nicht gegen die Strömungsrichtung der in der Regel gleichzeitig in den Sammelkanal fließenden anderen Komponente in deren Trennkanal und zu dem Eingangsventil gelangen kann.

In den die Trennstrecken bildenden Verbindungskanälen können zudem gesteuerte Freigabeeinrichtungen beispielsweise in Form weiterer Nadelventile zum Sperren und Öffnen dieser Verbindungskanäle vorgesehen sein, wodurch die Betriebssicherheit der Ventilanordnung erhöht werden kann.

Vorzugsweise führt zu dem gemeinsamen Sammelkanal der 2K-Ventilanordnung je ein als Trennkanal dienender Verbindungskanal von den Eingangsventilen beider Komponenten, wobei die beiden Trennkanäle zweckmäßig auf zueinander entgegengesetzten Seiten einer den gemeinsamen Sammelkanal enthaltenden Ebene verlaufen, mit ihren Mündungsabschnitten aber in dieser Ebene liegen können. Hierbei besteht die vorteilhafte Möglichkeit, dass die beiden Trennkanäle einander am Eingang des Sammelkanals strömungsgünstig unter Bildung eines Winkels beispielsweise zwischen 30° und 60° treffen, wobei sich nicht nur eine optimale Strömungssperre gegen das Eindringen in den jeweils anderen Trennkanal ergibt, sondern auch unerwünschte Druckverluste in der Ventilanordnung vermieden werden.

Vorteilhaft, ist ferner, dass durch die Erfindung beim Lackierbetrieb nicht durchströmte Toträume zwischen den verschiedenen Ventilmündungsbereichen vermieden werden können.

Besonders vorteilhaft ist eine Weiterbildung der Erfindung dahingehend, dass das Gehäuse der 2K-Ventilanordnung aus mindestens zwei, vorzugsweise aber drei getrennt voneinander herstellbaren und aneinander befestigbaren Gehäusekörpern besteht. Diese Gehäusekörper können scheibenartig geformt sein und mit ihren ebenen Scheibenhauptflächen aneinander anliegen, wobei der mittlere Gehäusekörper den den Komponenten gemeinsamen Sammelkanal enthält, während die äußeren Gehäusekörper auf der einen Seite das Eingangsventil für die eine Komponente und auf der anderen Seite das Eingangsventil für die andere Komponente enthalten. Die oben erwähnten Trennkanäle verlaufen hierbei durch Verbindungsstücke quer zu den Scheibenflächen aus den äußeren Gehäusekörpern in den inneren Gehäusekörper. Diese modulare Bauweise hat wesentliche fertigungstechnische Vorteile bei der Herstellung der hier beschriebenen Ventilanordnung und ermöglicht darüber hinaus auf sehr einfache Weise das Auswechseln von Ventilen oder eine Änderung der Anordnung der Ventile und beispielsweise auch eine Erweiterung der Ventilanordnung. In dem oder jedem äußeren Gehäusekörper können am Eingang des Trennkanals neben dem Eingangsventil der betreffenden Komponente des 2K-Systems problemlos jeweils weitere Eingangsventile für andere Medien angeordnet sein. Beim Auswechseln der die Eingangsventile enthaltenden Gehäusekörper ist es von Vorteil, wenn die Trennkanäle mit den oben erwähnten, in dem mittleren Gehäusekörper befindlichen Freigabeeinrichtungen gesperrt werden können.

Gemäß einem anderen Aspekt der Erfindung hat der Kanal einer Ventilanordnung, in den mehrere als Nadelventil ausgebildete Eingangsventile münden, also insbesondere der Eingangskanal für eine der Komponenten der 2K-Ventilanordnung oder beispielsweise auch der gemeinsame Farbkanal einer Farbwechselventilanordnung, einen annähernd polygonalen Querschnitt mit mindestens drei gegeneinander abgewinkelten ebenen Wandflächen. Dies hat den besonderen Vorteil, dass die ebenen Stirnflächen der Ventilnadeln der um den polygonalen Kanal vorzugsweise in einer gemeinsamen Ebene (oder im Fall des Farbwechslers in mehreren gemeinsamen Ebenen) quer zu der Längsachse des Kanals verteilten Ventile bei geschlossenem Ventil nicht in den Kanal ragen, sondern mit der jeweiligen ebenen Kanalwand fluchten, so dass Hinterschneidungen und darauf beruhende Lackanbackungen vermieden werden. Im Gegensatz zu der aus der EP 0979964 bekannten Ventilanordnung können hierbei je nach dem Polygon drei oder mehr Ventile in einer Ebene um den Kanal verteilt werden.

Gemäß einem weiteren, u.U. auch unabhängigen Aspekt der Erfindung kann durch zweckmäßige Gestaltung der Mündungsabschnitte der in einen gemeinsamen Sammelkanal mündenden Verbindungskanäle für miteinander zu mischende Medien auch ein Eindringen der Medien in die Mündung des Kanals des jeweils anderen Mediums verhindert werden.

An den in der Zeichnung dargestellten Ausführungsbeispielen wird die Erfindung näher erläutert. Es zeigen:
- Fig. 1: eine schematische Prinzipdarstellung einer für eine Serienbeschichtungsanlage geeigneten 2K-Ventilanordnung gemäß der Erfindung;
- Fig. 2: eine ebenfalls schematische perspektivische Ansicht der drei voneinander trennbaren Gehäusekörper einer zweckmäßigen Ausführungsform der Ventilanordnung gemäß Fig. 1;
- Fig. 3: eine konstruktiv zweckmäßige Realisierung der Ventilanordnung nach Fig. 2;
- Fig. 4: ein Ventilschaltbild der hier beschriebenen Ventilanordnung;
- Fig. 5: den annähernd dreieckigen Querschnitt durch einen Kanal mit ebenen Wänden, an denen jeweils ein Nadelventil mündet;
- Fig. 6: eine schematische Schnittansicht eines Ausführungsbeispieles der Erfindung mit zwei strömungsgünstig zusammengeführten Kanälen; und
- Fig. 7: eine vorteilhafte Abwandlung der Kanalgestaltung der Ausführungsbeispiele nach Fig. 6 oder Fig. 1.

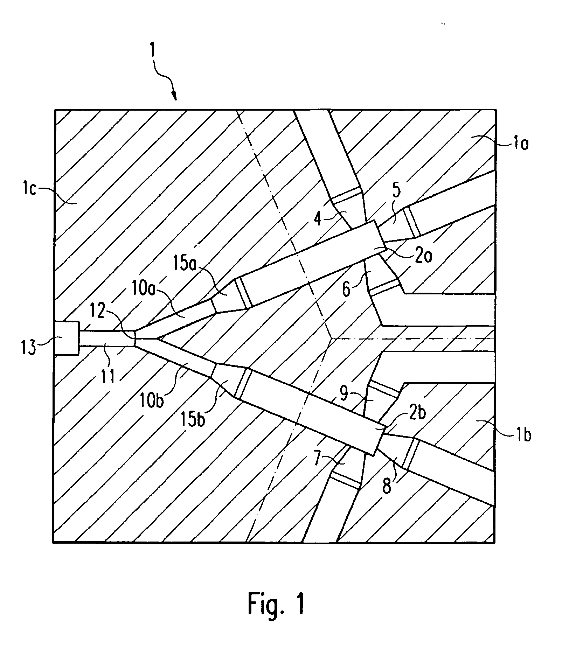

Die in Fig. 1 schematisch dargestellte 2K-Ventilanordnung hat ein aus drei Teilen 1a, 1b und 1c bestehendes Gehäuse 1. In dem ersten Teil 1a befindet sich ein Eingangssammelkanal 2a, in dem drei Eingangsventile 4, 5 und 6 münden, die jeweils in der von konventionellen 2K- oder auch Farbwechsel-Ventilanordnungen bekannten Weise als Nadelventile ausgebildet sein können und durch Signale eines übergeordneten Programmsteuersystems gesteuert sind. Die Eingangsventile können untereinander gleich ausgebildet sein und sperren oder öffnen jeweils einen in das Gehäuse 1 hineinführenden Kanal, durch den bei geöffnetem Ventil ein zu steuerndes Medium in den Eingangssammelkanal 2a fließt. Beispielsweise steuert das Ventil 4 die eine Komponente des 2K-Systems wie z.B. Stammlack, während beispielsweise das Ventil 5 die Stammlackkomponente eines stattdessen verwendbaren anderen 2K-Systems und das Ventil 6 ein Spülmedium wie Verdünner oder Pulsluft steuern können.

In dem zweiten Teil 1b befindet sich ähnlich wie im Teil 1a ein Eingangssammelkanal 2b, an dem ebenfalls drei programmgesteuerte Eingangsventile 7, 8 und 9 in Form von Nadelventilen angeordnet sind. Beispielsweise können die Ventile 7 und 8 den Eintritt der Härterkomponente der alternativ zueinander verwendbaren 2K-Systeme in den Eingangssammelkanal 2b und das Ventil 9 ein Spülmedium steuern.

Von den beiden Eingangssammelkanälen 2a und 2b führt jeweils ein Verbindungskanal 10b bzw. 10b zu einem den Komponenten des verwendeten 2K-Systems gemeinsamen Sammelkanal 11, der sich in dem dritten Gehäuseteil 1c befindet, und in dem die beiden Komponenten gemischt werden. Wie in der Zeichnung schematisch dargestellt ist, sind die durch den Eingangssammelkanal 2a bzw. 2b und den zugehörigen Verbindungskanal 10a bzw. 10b gebildeten Leitungssysteme durch entsprechende Ausbildung des Gehäusekörpers bis zu der Einmündung in den gemeinsamen Sammelkanal 11 voneinander getrennt. Vorzugsweise treffen sich die Verbindungskanäle 10a, 10b an einer ihnen gemeinsamen Eingangsstelle 12 des Sammelkanals 11. Bei dem betrachteten Ausführungsbeispiel bilden die mindestens zwei Verbindungskanäle 10a, 10b die einzigen Zugänge zu dem Sammelkanal 11, insbesondere ist kein Zugang für Druckluft oder ein sonstiges Treibmittel vorhanden (wie im Fall der eingangs genannten DE 6751526 U und DE 578937 A). Darstellungsgemäß ist vielmehr m. a. W. die Verbindungsstelle der Verbindungskanäle und des Sammelkanals durch den die Verbindungsstelle umgebenden Teil des Gehäusekörpers vollständig umschlossen, so dass bei zwei Verbindungskanälen die in Fig. 1 dargestellte Y-Form gebildet ist. Während des Beschichtungsbetriebes sind nur die Eingangsventile wie z.B. 4 und 7 für Stammlack und Härter des gewählten 2K-Systems geöffnet, so dass diese beiden Komponenten gleichzeitig durch die Verbindungskanäle 10a, 10b in den gemeinsamen Sammelkanal 11 fließen. Infolgedessen wirken die Verbindungskanäle 10a, 10b als Trennstrecken, durch die keine der beiden Komponenten gegen die Strömungsrichtung in das jeweils andere Leitungssystem gelangen kann. An dem zu seiner Eingangsstelle 12 entgegengesetzten Ende hat der gemeinsame Sammelkanal 11 einen Ausgang 13, aus dem das Gemisch der beiden Komponenten zu dem Zerstäubungs- oder sonstigen Applikationsorgan der Beschichtungsanlage fließt. In jedem der Verbindungskanäle 10a, 10b kann sich eine zweckmäßig ebenfalls als Nadelventil üblicher Art ausgebildete, auch unabhängig von der jeweils anderen steuerbare Freigabeeinrichtung 15a bzw. 15b befinden, mit der der Weg von dem jeweiligen Eingangssammelkanal 2a bzw. 2b in den gemeinsamen Sammelkanal 11 gesperrt werden kann.

Entsprechend der dargestellten symmetrischen Y-Anordnung bilden die Achsen der Mündungsabschnitte der Verbindungskanäle 2a, 2b an der Ihnen gemeinsamen Eingangsstelle 12 des Sammelkanals 11 miteinander einen spitzen Winkel, der bei diesem Beispiel etwa 45° beträgt, und mit der Achse des Eingangsabschnitts des als geradlinig angenommenen Sammelkanals 11 jeweils die Hälfte dieses Winkels. Vorzugsweise liegen diese drei ein Y bildenden Achsen in einer gemeinsamen Ebene.

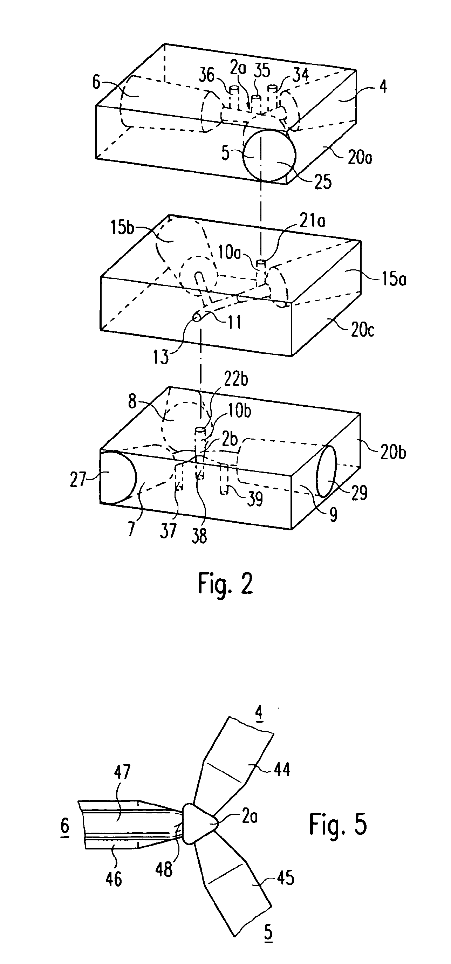

Das Gehäuse 1 der Ventilanordnung könnte die in Fig. 1 dargestellten Ventil- und Leitungssysteme in einem einstückig geformten Gehäusekörper enthalten. Bei einer bevorzugten Ausführungsform, die schematisch vereinfacht in Fig. 2 dargestellt ist, besteht das Gehäuse aber aus drei einzelnen scheibenartigen Gehäusekörpern 20a, 20b und 20c, die in der dargestellten Orientierung mit ihren Hauptflächen aneinander befestigt werden. Beispielsweise kann der in der Zeichnung obere Gehäusekörper 20a die gemäß Fig. 1 vorgesehenen Eingangsventile 4 und 5 für Stammlack und das Ventil 6 enthalten, während sich die Ventile 7 und 8 für Härter und das weitere Eingangsventil 9 in dem unteren Gehäusekörper 20b befinden können.

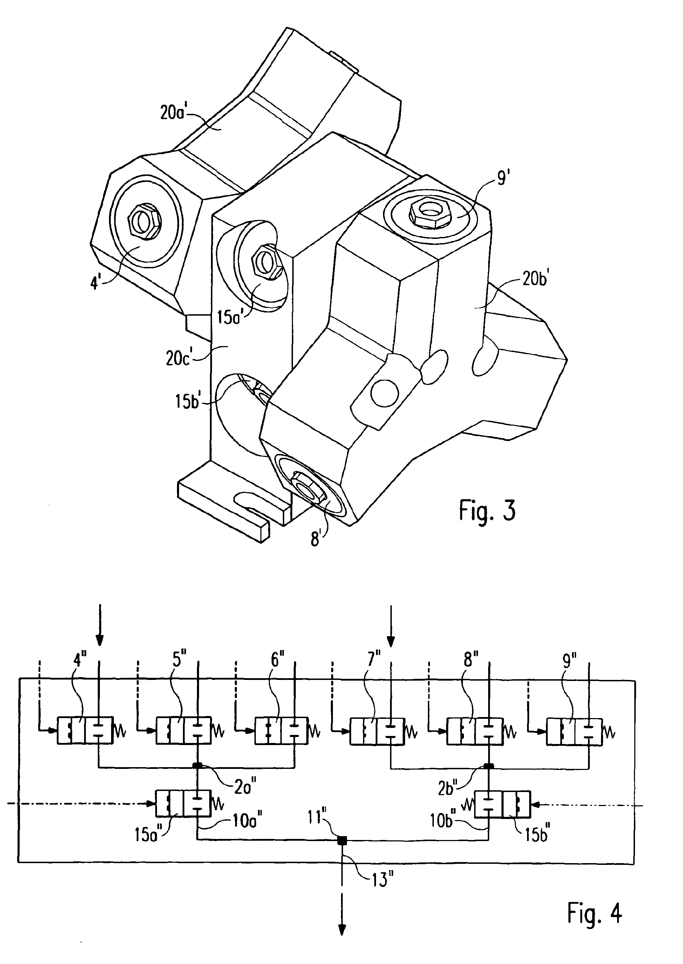

Die Eingangsventile sind darstellungsgemäß liegend in dem jeweiligen Scheibenkörper angeordnet, d.h. die Achsen der Ventilnadeln können in einer zu den Scheibenhauptflächen parallelen Ebene sternförmig um den senkrecht zu den Hauptflächen verlaufenden jeweiligen Eingangssammelkanal 2a (in Fig. 2 nicht sichtbar) bzw. 2b verteilt sein. Die Nadelventile sind durch Öffnungen in den quer zu den Hauptflächen liegenden Seitenflächen der Gehäusekörper 20a und 20b eingesetzt; die Öffnungen zum Einsetzen der Ventile 5, 7 und 9 sind bei 25, 27 und 29 sichtbar. Die von den Eingangsventilen gesteuerten, bei 34, 35 und 36 bzw. 37, 38 und 39 angedeuteten Kanäle, durch die die jeweiligen Medien in die Ventilanordnung geleitet werden, können von ihrer Öffnung in der betreffenden Hauptfläche zunächst senkrecht hierzu bis zu dem zugehörigen Ventil und dann längs dessen Nadelachse parallel zu den Hauptflächen bis zu der Einmündung in den Eingangssammelkanal 2a bzw. 2b verlaufen. (die Einmündung ist in Fig. 3 genauer dargestellt). Die Eingangssammelkanäle 2a und 2b münden ihrerseits jeweils an einer Öffnung des betreffenden Gehäusekörpers in der dem mittleren Gehäusekörper 20c zugewandten Hauptfläche. Die Öffnung 22b des Kanals 2b in der Hauptfläche des Gehäusekörpers 20b ist in Fig. 2 sichtbar.

Wenn die drei Gehäusekörper 20a, 20b und 20c zur Bildung des Gehäuses 1 (Fig. 1) der 2K-Ventilanordnung zusammengesetzt sind, fluchtet der Eingangssammelkanal 2a für den Stammlack entsprechend der Strichpunktlinie mit einem quer zu der Scheibenhauptfläche in den mittleren Gehäusekörper 20c führenden Abschnitt des Verbindungskanals 10a, dessen Öffnung in der Hauptfläche bei 21a sichtbar ist. Innerhalb des Gehäusekörpers 20c setzt sich der Verbindungskanal 10a dann in dem die Freigabeeinrichtung 15a bildenden Nadelventil längs dessen Nadelachse bis zu der Einmündung in den gemeinsamen Sammelkanal 11 fort, dessen z.B. geradlinige Achse in einer zu den Hauptflächen parallelen Ebene liegt, und dessen Ausgang 13 an der Außenseite des Gehäusekörpers 20c sichtbar ist.

Ebenso geht der Eingangssammelkanal 2b für den Härter quer zu den Scheibenhauptflächen fluchtend in einen Abschnitt des Verbindungskanals 10b über, der ähnlich dem Verbindungskanal 10a innerhalb des Gehäusekörpers 20c in einen parallel zu den Hauptflächen durch die Freigabeeinrichtung 15b zu dem gemeinsamen Sammelkanal 11 verlaufenden Abschnitt übergeht.

An den Verbindungsstellen zwischen den durch die beiden Strichpunktlinien angedeuteten, in den Gehäusekörpern 20a, 20b und 20c quer zu den Hauptflächen verlaufenden Abschnitten der beiden Verbindungskanäle 10a und 10b, also an den Öffnungen 21a und 22b, befindet sich zwischen den aneinander angrenzenden Gehäusekörpern jeweils ein diese Kanalabschnitte abdichtend zusammenfügendes Verbindungsstück (nicht dargestellt). Da die Achsen dieser Kanalabschnitte die Nadelachsen der Freigabeventile der Einrichtungen 15a, 15b an von der Eingangsstelle 12 des Sammelkanals 11 entfernten Stellen schneiden, sind sie darstellungsgemäß gegeneinander versetzt.

Fig. 3 ist die Darstellung einer zweckmäßigen, praktisch realisierbaren Ventilanordnung nach Fig. 2 und insbesondere der drei Gehäusekörper 20a, 20b und 20c, die hier mit 20a', 20b' bzw. 20c' bezeichnet sind. Die beiden äußeren, bei diesem Beispiel untereinander spiegelbildlich gleichen oder ähnlichen Gehäusekörper 20a' und 20b' können also die dargestellte stern- oder Y-förmige Gestalt mit drei gegeneinander abgewinkelten Ventilgehäuseteilen haben, in die jeweils eines der drei Ventile 4, 5 und 6 bzw. 7, 8 und 9 (Fig. 2) geschraubt ist. Bei 4' ist z.B. die Außenseite des Ventils 4 in der radialen Stirnfläche des dieses Ventil enthaltenden Gehäuseteils des Gehäusekörpers 20a' sichtbar, während in den radialen Stirnflächen der die Ventile 8 bzw. 9 enthaltenden Gehäuseteile des Gehäusekörpers 20b' diese Ventile bei 8' bzw. 9' (entsprechend z.B. der Öffnung 29 in Fig. 2) sichtbar sind. In dem mittleren Gehäusekörper 20c', der als annähernd rechteckig dargestellt ist, sind die Außenseiten der beiden hier mit 15a' und 15b' bezeichneten Freigabeventile in entsprechenden Bohrungen in einer der quer zu den Hauptflächen liegenden Seitenflächen erkennbar.

In Fig. 4 ist zur weiteren Verdeutlichung das Schaltschema der beschriebenen gesteuerten Eingangsventile 4 bis 9 und der Freigabeventile 15a und 15b als 2/2-Wegeventile 4" bis 9" bzw. 15a'' und 15b'' dargestellt. An die Ausgänge der die Eingangsventile 4 bis 6 der Anordnung nach Fig. 1 oder Fig. 2 darstellenden Ventile 4'', 5" und 6'' ist bei 2a'' der zugehörige Eingangssammelkanal 2a angeschlossen, während die Ausgänge der Ventile 7'', 8" und 9" bei 2b" in ähnlicher Weise an den Eingangssammelkanal 2b zusammengeführt sind. Von dort führt je eine Verbindungsleitung 10a'' bzw. 10b" (entsprechend den Kanälen 10a und 10b) über die Freigabeventile 15a'' bzw. 15b'' zu dem allen Ventilen gemeinsamen Sammelkanal bei 11'' und zu dem Ausgang 13'' der Ventilanordnung. Die Eingangsventile der hier beschriebenen Ventilanordnungen müssen nur zum Öffnen und Schließen der Eingangsleitungen dienen, in der Regel dagegen nicht zum Einstellen des Mischungsverhältnisses, das typisch durch den Eingangsleitungen außerhalb der Ventilanordnung vorgeschaltete Dosiereinrichtungen eingestellt wird.

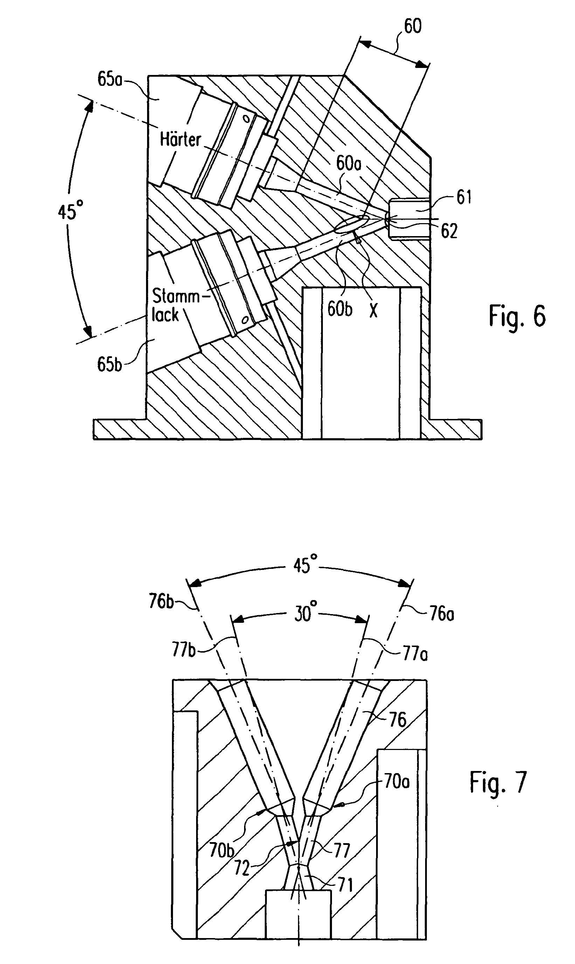

Fig. 5 ist eine vereinfachte Darstellung der Einmündung von drei Nadelventilen in einen Sammelkanal mit polygonalem, hier annähernd dreieckigem Querschnitt gemäß dem eingangs erläuterten besonderen Aspekt der Erfindung. Obwohl diese Anordnung nicht auf 2K-Ventile beschränkt ist, kann es sich insbesondere um den Eingangssammelkanal 2a (oder 2b) in dem Gehäusekörper 20a (bzw. 20b) gemäß Fig. 2 mit den in einer gemeinsamen Ebene angeordneten Eingangsventilen 4, 5 und 6 (bzw. 7, 8 und 9) handeln, von denen nur die den konischen Ventilsitz bildenden Ventilöffnungen 44, 45 bzw. 46 und im Fall des Ventils 6 dessen Nadel 47 in ihrer das Ventil schließenden Stellung dargestellt sind. Entsprechend der Form des Ventilsitzes verjüngt sich die Ventilnadel 47 an ihrem Ende bis zu ihrer ebenen Stirnfläche 48. Die Einmündungsstelle der Ventile 7, 8 und 9 in den Eingangssammelkanal 2b im Gehäusekörper 20b kann gleich oder ähnlich sein. Die Querschnittsform des Sammelkanals kann zweckmäßig der Anzahl der in derselben Ebene liegenden Ventile entsprechen, also z.B. bei vier Ventilen rechteckig sein. Die Ecken des Polygons sind vorzugsweise mit relativ großem Radius abgerundet, was u.a. die Spülbarkeit der Kanäle verbessert. Es ist auch denkbar, dass die Nadelachsen nicht in einer gemeinsamen Ebene liegen, sondern die Kanalachse schräg, also mit einem von 90° verschiedenen Winkel schneiden.

Aufgrund des polygonalen Kanalquerschnitts kann die ebene, bei dem betrachteten Beispiel senkrecht zu der Nadelachse liegende Stirnfläche 48 der Ventilnadeln 47 bei geschlossenem Ventil mit der die betreffende Ventilöffnung enthaltenden ebenen Wand des Eingangssammelkanals 2a fluchten, wie in Fig. 3 ersichtlich ist, so dass weder die Ventilnadel in den Kanal hineinragt noch ein Hohlraum zwischen ihrer Stirnfläche und dem Kanal verbleibt.

Während die Kanäle 2a und 2b in Fig. 2 den beschriebenen polygonalen Querschnitt haben können, kann der Querschnitt der in die nachgeschalteten Freigabeventile 15a und 15b führenden Abschnitte der Verbindungskanäle 10a, 10b rund, z.B. kreisförmig sein. Der Übergang zwischen diesen unterschiedlichen Kanalquerschnittsformen kann zweckmäßig in den erwähnten abdichtenden Verbindungsstücken zwischen den drei Gehäusekörpern 20a, 20b und 20c konstruktiv realisiert sein.

Fig. 6 zeigt ein Ausführungsbeispiel der Erfindung, bei dem es sich um den mittleren Gehäusekörper 20c bzw. 20c' gemäß Fig. 2 oder Fig. 3 handeln kann oder aber stattdessen auch um eine andere erfindungsgemäße Anordnung, die lediglich die beiden Verbindungskanäle 60a und 60b für die Zuleitung zu mischender Medien wie z.B. Härter und Stammlack enthält, die in den ihnen gemeinsamen Sammelkanal 61 münden. Darstellungsgemäß kann zum Öffnen und Schließen der Verbindungskanäle 60a, 60b je ein gesteuertes Nadelventil 65a, 65b (oder sonstiges Ventil) vorgesehen sein. Ähnlich wie in Fig. 1 (Kanäle 10a, 10b) haben die Kanäle 60a und 60b im Bereich vor der Mündungsstelle 62, beispielsweise zwischen dem Ausgang (Ventilsitz) des Nadelventils 65a bzw. 65b und der Mündungsstelle 62, gerade Abschnitte entsprechend dem Doppelpfeil 60, die miteinander strömungsgünstig einen Winkel von z.B. 45° bilden können.

Die Abschnitte 60 bilden die oben beschriebenen definierten Trennstrecken. Unter ungünstigen Umständen könnte aber die Gefahr auftreten, dass insbesondere langfristig und allmählich die eine Komponente wie z.B. Härter in den Verbindungskanal der anderen Komponente einwandert und sich dort in der Nähe der Mündung an der Kanalwand ablagert, vor allem an der bei X angedeuteten Stelle. Dieses "Anbacken" kann durch zweckmäßige Gestaltung der Mündungsabschnitte der Verbindungskanäle (oder wenigstens des Stammlackkanals) verhindert werden, wie bei den Verbindungskanälen 70a und 70b in Fig. 7 dargestellt ist.

Eine erste Gestaltungsmöglichkeit besteht darin, dass die Querschnittsfläche des Verbindungskanals 70a bzw. 70b im Bereich vor der Mündungsstelle 72 zur Bildung einer die Strömungsgeschwindigkeit erhöhenden Verengung verringert ist. Bei dem dargestellten Beispiel hat jeder der beiden Verbindungskanäle 70a, 70b, denen z.B. in der beschriebenen Weise hier nicht dargestellte Ventile vorgeschaltet sein können, einen ventilseitigen ersten geraden Abschnitt 76, der stufenlos in einen in der Regel kürzeren mündungsseitigen zweiten geraden Abschnitt 77 übergeht, dessen z.B. kreisförmiger Strömungsquerschnitt kleiner ist als der des Abschnitts 76. Innerhalb der Abschnitte 76 und 77 kann der Strömungsquerschnitt gleich bleiben oder sich stetig ändern, insbesondere verringern. Die gewünschte düsenartige Verengung kann auch durch andere zweckmäßige Konstruktionen gebildet werden. Durch die im Vergleich mit Fig. 6 erheblich höhere Strömungsgeschwindigkeit an der Kanalmündung, also an der Stelle, an der die Medien zusammentreffen, wird die von der betreffenden Komponente an der Wand ihres Kanals ausgeübte Scherkraft erhöht, was insbesondere für die Stammlackkomponente eines 2K-Systems wichtig ist.

Eine ebenfalls in Fig. 7 dargestellte andere oder zusätzliche Möglichkeit besteht darin, dass der von den Längsachsen der Verbindungskanäle 70a, 70b gebildete Winkel sich im Bereich vor der Mündungsstelle 72 ändert. Bei dem dargestellten Beispiel bilden die Längsachsen 76a und 76b der beiden ersten Abschnitte 76 mit der Längsachse des sich an die Mündungsstelle 72 anschließenden Abschnitts des Sammelkanals 71 jeweils einen Winkel von 22,5°, miteinander also einen Winkel von 45°, während die Längsachsen 77a und 77b der ebenfalls symmetrisch zu der Längsachse des Sammelkanals 71 liegenden zweiten Abschnitte 77 miteinander einen kleineren Winkel von 30° bilden. Jeder Verbindungskanal hat also im Bereich vor der Mündungsstelle 72 zwei gegeneinander abgewinkelte Abschnitte 76, 77. Die Längsachsen der Verbindungskanäle 70a und 70b und die Längsachse des Sammelkanals 71 liegen bei dem dargestellten Beispiel zumindest im Bereich vor der Mündungsstelle 72 in einer Ebene. Durch die Umlenkung des Mediums an der Abknickstelle innerhalb des Verbindungskanals wird an der für Ablagerungen besonders anfälligen Zusammenfluss-Stelle an der radial inneren Innenseite der Kanalwand (in Fig. 6 bei X) ein Abstreifeffekt zur Selbstreinigung der Kanalwand erreicht, der durch die in der beschriebenen Weise erhöhte Ausflussgeschwindigkeit noch verstärkt wird. Die Wandreibung (N/m²) kann in dem für Ablagerungen kritischen Bereich durch diese Maßnahmen auf das 10-fache erhöht werden.

## Patentansprüche

1. Ventilanordnung für mindestens zwei miteinander zu mischende Komponenten fließfähiger Medien
insbesondere für Zweikomponentenlack in einer Anlage zur Serienbeschichtung von Werkstücken,
mit einem Gehäuse (1), in das Eingangsleitungen (34-39) für die beiden Komponenten führen,
mit in dem Gehäuse (1) angeordneten, durch Signale eines Programmsteuersystems steuerbare Eingangsventile (4-9) zum Öffnen und Schließen der Eingangsleitungen
und mit einem in dem Gehäuse (1) an die Ausgänge der Ventile angeschlossenen Sammelkanal (11) für die zu mischenden Komponenten, an dessen Ausgang (13) eine das Gemisch einem Verbaucher zuführende Ausgangsleitung angeschlossen oder anschließbar ist,
**dadurch gekennzeichnet, dass** sich zwischen den Eingangsventilen (4-9) und dem den Komponenten gemeinsamen Sammelkanal Verbindungskanäle (10a, 10b) befinden, die zwischen dem Sammelkanal (11) und den Ausgängen der Eingangsventile Trennstrecken bilden.

2. Ventilanordnung nach Anspruch 1, **dadurch gekennzeichnet, dass** an den Verbindungskanälen (10a, 10b) Freigabeeinrichtungen (15a, 15b) zum Sperren und Öffnen der Verbindungskanäle vorgesehen sind.

3. Ventilanordnung nach Anspruch 1 oder 2, **dadurch gekennzeichnet, dass** die Verbindungskanäle (10a, 10b) einander an einem zu seinem Ausgang (13) entgegengesetzten Eingangsende (12) des Sammelkanals (11) unter Bildung eines Winkels treffen.

4. Ventilanordnung nach Anspruch 3, **dadurch gekennzeichnet, dass** der zwischen den Mündungsachsen der Verbindungskanäle (10a, 10b) gebildete Winkel weniger als 90°, vorzugsweise zwischen 30° und 60° beträgt und die Längsachse des Eingangsabschnitts des Sammelkanals (11) durch die Mitte dieses Winkels verläuft.

5. Ventilanordnung nach Anspruch 3 oder 4, **dadurch gekennzeichnet, dass** die Mündungsabschnitte der Verbindungskanäle (10a, 10b) und der Eingangsabschnitt des Sammelkanals (11) wenigstens annähernd in einer Ebene liegen.

6. Ventilanordnung nach einem der vorangehenden Ansprüche, **dadurch gekennzeichnet, dass** der oder jeder Verbindungskanal (10a, 10b) einen Abschnitt hat, der quer zu einer Ebene verläuft, in der wenigstens annähernd die Achsen des Eingangsabschnitts des den Komponenten gemeinsamen Sammelkanals (11) und des Verbindungskanals (10a, 10b) liegen.

7. Ventilanordnung nach einem der vorangehenden Ansprüche, **dadurch gekennzeichnet, dass** das Gehäuse (1) aus mindestens zwei getrennt voneinander herstellbaren und aneinander befestigbaren Gehäusekörpern (20a, 20b, 20c) besteht, von denen der eine Gehäusekörper (20a, 20b) mindestens ein Eingangsventil (4, 5) für eine der Komponenten und der andere Gehäusekörper (20c) den den Komponenten gemeinsamen Sammelkanal (11) enthält.

8. Ventilanordnung nach Anspruch 7, **dadurch gekennzeichnet, dass** zwischen den beiden Gehäusekörpern (20a, 20b, 20c) ein Verbindungsstück zur dichten Verbindung der in den Gehäusekörpern verlaufenden Abschnitte des Verbindungskanals (10a, 10b) vorgesehen ist.

9. Ventilanordnung nach einem der vorangehenden Ansprüche oder nach dem Oberbegriff des Anspruchs 1, **dadurch gekennzeichnet, dass** mindestens ein Eingangskanal (2a, 2b) mit mindestens einer ebenen Wandfläche vorgesehen ist, in deren Ebene die Ausgangsöffnung eines als Nadelventil ausgebildeten Eingangsventils (4-9) und bei geschlossenem Eingangsventil die ebene Stirnfläche (48) der Ventilnadel (47) des Eingangsventils liegen.

10. Ventilanordnung nach Anspruch 9, **dadurch gekennzeichnet, dass** der Eingangskanal (2a, 2b) einen wenigstens annähernd polygonalen Querschnitt mit mindestens zwei ebenen Wandflächen für als Nadelventil ausgebildete Eingangsventile (4-9) hat.

11. Ventilanordnung nach einem der vorangehenden Ansprüche, **dadurch gekennzeichnet, dass** zwei Eingangskanäle (2a, 2b) mit vorzugsweise wenigstens annähernd polygonalem Querschnitt vorgesehen sind, die sich auf zueinander entgegengesetzten Seiten einer Ebene erstrecken, in der der den Komponenten gemeinsame Sammelkanal (11) liegt.

12. Ventilanordnung nach einem der Ansprüche 8 bis 11, **dadurch gekennzeichnet, dass** der durch das Verbindungsstück zwischen den beiden Gehäusekörpern (20a, 20b, 20c) führende Kanal in dem Verbindungsstück von einer polygonalen Querschnittsform in eine runde Querschnittsform übergeht.

13. Ventilanordnung insbesondere nach Anspruch 1 für fließfähige Medien mit einem Gehäuse (1), in das Eingangsleitungen (34-39) für die Medien führen, mit in dem Gehäuse angeordneten gesteuerten Nadelventilen (4-9) zum Öffnen und Schließen der Eingangsleitungen und mit einem in dem Gehäuse (1) an den Ausgängen der Nadelventile angeordneten Kanal (2a, 2b) für die Medien, **dadurch gekennzeichnet, dass** der Kanal (2a, 2b) einen wenigstens annähernd polygonalen Querschnitt und mindestens drei gegeneinander abgewinkelte ebene Wandflächen hat, in deren Ebene jeweils die Ausgangsöffnung eines der Nadelventile (4-9) und bei geschlossenem Ventil die ebene Stirnfläche (48) der Ventilnadel (47) liegen.

14. Ventilanordnung nach einem der Ansprüche 10 bis 12, **dadurch gekennzeichnet, dass** die Nadelachsen von an den ebenen Wandflächen angeordneten Nadelventilen (4-9) in einer senkrecht zu der Längsachse des polygonalen Eingangskanals (2a, 2b) verlaufenden gemeinsamen Ebene liegen.

15. Ventilanordnung insbesondere nach einem der vorangehenden Ansprüche mit zwei voneinander getrennten, in einen ihnen gemeinsamen Sammelkanal (71) mündenden Verbindungskanälen (70a, 70b) für miteinander zu mischende Medien, deren Längsachsen (77a, 77b) an der Mündungsstelle (72) miteinander einen Winkel von weniger als 90° bilden, **dadurch gekennzeichnet, dass**
die Querschnittsfläche mindestens eines oder jedes Verbindungskanals (70a, 70b) im Bereich vor der Mündungsstelle (72) zur Bildung einer die Strömungsgeschwindigkeit erhöhenden Verengung verringert ist
und/oder der von den Längsachsen (76a, 76b; 77a, 77b) der Verbindungskanäle (70a, 70b) gebildete Winkel sich im Bereich vor der Mündungsstelle (72) ändert.

16. Ventilanordnung nach Anspruch 15, **dadurch gekennzeichnet, dass** der oder jeder Verbindungskanal (70a, 70b) im Bereich vor der Mündungsstelle (72) ineinander übergehende Abschnitte (76, 77) mit geraden Längachsen (76a, 76b) hat.

17. Ventilanordnung nach Anspruch 16, **dadurch gekennzeichnet, dass** der mündungsseitige Abschnitt (77) einen kleineren Strömungsquerschnitt hat als der andere Abschnitt (76).

18. Ventilanordnung nach Anspruch 16 oder 17, **dadurch gekennzeichnet, dass** der Winkel, den die Längsachsen (77a, 77b) der beiden Verbindungskanäle (70a, 70b) unmittelbar vor der Mündungsstelle (72) miteinander bilden, kleiner ist als der Winkel zwischen den Längsachsen (76a, 76b) der stromaufwärts von einer Abwinkelungsstelle liegenden Kanalabschnitte (76).

19. Ventilanordnung nach Anspruch 18, **dadurch gekennzeichnet, dass** der eine Winkel ungefähr 30° und der andere Winkel ungefähr 45° beträgt.

20. Ventilanordnung nach einem der Ansprüche 15 bis 19, **dadurch gekennzeichnet, dass** die Verbindungskanäle (70a, 70b) im Bereich vor der Mündungsstelle (72) in einer Ebene liegen.

## Claims

1. Valve arrangement for at least two components of free-flowing media which are to be mixed together, in particular for two-component paint in an installation for the serial coating of workpieces, with a housing (1) into which inlet lines (34 to 39) for the two components lead, with inlet valves (4 to 9) which are disposed in the housing (1) and are controllable by signals from a program control system for opening and closing the inlet lines, and with a collecting channel (11) for the components to be mixed which is connected to the outlets of the valves in the housing (1) and which has an outlet line supplying the mixture to a consumer connected to or connectable to the outlet (13) of the collecting channel, **characterised in that** between the inlet valves (4 to 9) and the collecting channel which is common to the components there are located connecting channels (10a, 10b) which form separating sections between the collecting channel (11) and the outlets of the inlet valves.

2. Valve arrangement as claimed in Claim 1, **characterised in that** release means (15a, 15b) for shutting off or opening the connecting channels (10a, 10b)are provided on the connecting channels.

3. Valve arrangement as claimed in Claim 1 or 2, **characterised in that** the connecting channels (10a, 10b) meet one another and form an angle at an inlet end (12) of the collecting channel (11) opposite the outlet (13) thereof.

4. Valve arrangement as claimed in Claim 3, **characterised in that** the angle formed between the mouth axes of the connecting channels (10a, 10b) is less than 90°, preferably between 30° and 60°, and the longitudinal axis of the inlet section of the collecting channel (11) extends through the centre of this angle.

5. Valve arrangement as claimed in Claim 3 or 4, **characterised in that** the mouth portions of the connecting channels (10a, 10b) and the inlet portion of the collecting channel (11) lie at least approximately in a plane.

6. Valve arrangement as claimed in any one of the preceding claims, **characterised in that** the or each connecting channel (10a, 10b) has a portion which extends transversely with respect to a plane in which the axes of the inlet portion of the colleting channel (11) common to the components and of the connecting channel (10a, 10b) lie at least approximately.

7. Valve arrangement as claimed in any one of the preceding claims, **characterised in that** the housing (1) comprises at least two housing bodies (20a, 20b, 20c) which can be produced separately from one another and can be fixed on one another, and of which one housing body (20a, 20b) has at least one inlet valve (4, 5) for one of the components and the other housing body (20c) contains the collecting channel (11) which is common to the components.

8. Valve arrangement as claimed in Claim 7, **characterised in that** a connecting piece for sealed connection of the portions of the connecting channel (10a, 10b) extending in the housing bodies is provided between the two housing bodies (20a, 20b, 20c).

9. Valve arrangement as claimed in any one of the preceding claims or according to the preamble to Claim 1, **characterised in that** at least one inlet channel (2a, 2b) with at least one flat wall surface is provided, in the plane of which lie the outlet orifice of an inlet valve (4 to 9) constructed as a needle valve and, when the inlet valve is closed, the flat end face (48) of the valve needle (47) of the inlet valve.

10. Valve arrangement as claimed in Claim 9, **characterised in that** the inlet channel (2a, 2b) has an at least approximately polygonal cross-section with at least two flat wall surfaces for inlet valves (4 to 9) constructed as needle valves.

11. Valve arrangement as claimed in any one of the preceding claims, **characterised in that** two inlet channels (2a, 2b) are provided which preferably have at least an approximately polygonal cross-section and which extend on sides opposing one another of a plane in which the collecting channel (11) common to the components lies.

12. Valve arrangement as claimed in any one of Claims 8 to 11, **characterised in that** the channel passing through the connecting piece between the two housing bodies (20a, 20b, 20c) changes from a polygonal cross-sectional shape into a round cross-sectional shape in the connecting piece.

13. Valve arrangement in particular as claimed in Claim 1 for free-flowing media with a housing (1) into which inlet lines (34 to 39) for the media lead, with controlled needle valves (4 to 9) disposed in the housing for opening and closing the inlet lines and with a channel (2a, 2b) for the media which is disposed in the housing (1) at the outlets of the needle valves, **characterised in that** the channel (2a, 2b) has an at least approximately polygonal cross-section and at least three flat wall surfaces which are angled against one another and in the planes of which in each case lie the outlet orifice of one of the needle valves (4 to 9) and, when the valve is closed, the flat end face (48) of the valve needle (47).

14. Valve arrangement as claimed in any one of Claims 10 to 12, **characterised in that** the needle axes of needle valves (4 to 9) disposed on the flat wall surfaces lie in a common plane extending perpendicular to the longitudinal axis of the polygonal inlet channel (2a, 2b).

15. Valve arrangement in particular as claimed in any one of the preceding claims, with two connecting channels (70a, 70b) for media to be mixed together, which channels are separated from one another and open into a common collecting channel (71), the longitudinal axes (77a, 77b) of which together form an angle of less than 90° at the mouth location (72), **characterised in that** the cross-sectional area of at least one or each of the connecting channels (70a, 70b) is reduced in the region before the mouth location (72) in order to form a narrowed portion which increases the flow speed, and/or the angle formed by the longitudinal axes (76a, 76b; 77a, 77b) of the connecting channels (70a, 70b) changes in the region before the mouth location (72).

16. Valve arrangement as claimed in Claim 15, **characterised in that** the or each connecting channel (70a, 70b) has in the region before the mouth location (72) portions (76, 77) which merge into one another with straight longitudinal axes (76a, 76b).

17. Valve arrangement as claimed in Claim 16, **characterised in that** the portion (77) at the mouth end has a smaller flow cross-section than the other portion (76).

18. Valve arrangement as claimed in Claim 16 or 17, **characterised in that** the angle which the longitudinal axes (77a, 77b) of the two connecting channels (70a, 70b) form with one another directly before the mouth location (72) is smaller than the angle between the longitudinal axes (76a, 76b) of the channel portions (76) lying upstream of a bending point.

19. Valve arrangement as claimed in Claim 18, **characterised in that** one angle is approximately 30° and the other angle is approximately 45°.

20. Valve arrangement as claimed in any one of Claims 15 to 19, **characterised in that** the connecting channels (70a, 70b) lie in a plane in the region before the mouth location (72).

## Revendications

1. Agencement de soupapes pour au moins deux composants à mélanger entre eux de milieux fluides, en particulier pour une peinture à deux composants dans une installation de revêtement en série de pièces, comportant un boîtier (1) dans lequel mènent des conduites d'entrée (34-39) pour les deux composants, comportant des soupapes d'entrée (4-9) pouvant être commandées par des signaux d'un système de commande à programme et disposées dans le boîtier 1, pour l'ouverture et la fermeture des conduites d'entrée, et comportant un canal de collecte (11) raccordé dans le boîtier (1) aux sorties des soupapes pour les composants à mélanger, à la sortie (13) duquel est raccordée ou peut être raccordée une conduite de sortie amenant le mélange à un récepteur, **caractérisé en ce qu'**entre les soupapes d'entrée (4-9) et le canal de collecte commun aux composants se trouvent des canaux de liaison (10a, 10b) qui forment des parcours de séparation entre le canal de collecte (11) et les sorties des soupapes d'entrée.

2. Agencement de soupapes selon la revendication 1, **caractérisé en ce que** sur les canaux de liaison (10a, 10b) sont prévus des dispositifs de dégagement (15a, 15b) pour fermer et ouvrir les canaux de liaison.

3. Agencement de soupapes selon la revendication 1 ou 2, **caractérisé en ce que** les canaux de liaison (10a, 10b) se rencontrent à une extrémité d'entrée (12) du canal de collecte (11), opposée à sa sortie (13), en formant un angle.

4. Agencement de soupapes selon la revendication 3, **caractérisé en ce que** l'angle formé entre les axes d'embouchure des canaux de liaison (10a, 10b) sont inférieurs à 90°, compris de préférence entre 30° et 60° et l'axe longitudinal du segment d'entrée du canal de collecte (11) passe par le milieu de cet angle.

5. Agencement de soupapes selon la revendication 3 ou 4, **caractérisé en ce que** les segments d'embouchure des canaux de liaison (10a, 10b) et le segment d'entrée du canal de collecte (11) se situent au moins approximativement dans un plan.

6. Agencement de soupapes selon l'une des revendications précédentes, **caractérisé en ce que** le ou chaque canal de liaison (10a, 10b) possède un segment qui s'étend transversalement à un plan dans lequel se situent au moins approximativement des axes du segment d'entrée du canal de collecte (11), commun aux composants, et du canal de liaison (10a, 10b).

7. Agencement de soupapes selon l'une des revendications précédentes, **caractérisé en ce que** le boîtier (1) est constitué d'au moins deux corps de boîtier (20a, 20b, 20c) pouvant être fabriqués séparément l'un de l'autre et fixés l'un à l'autre, dont un corps de boîtier '20a, 20b) contient au moins une soupape d'entrée (4, 5) pour l'un des composants et l'autre corps de boîtier (20c) contient le canal de collecte (11) commun aux composants.

8. Agencement de soupapes selon la revendication 7, **caractérisé en ce qu'**entre les deux corps de boîtier (20a, 20b, 20c) est prévue une pièce de liaison pour la liaison étanche des segments du canal de liaison (10a, 10b), s'étendant dans les corps de boîtier.

9. Agencement de soupapes selon l'une des revendications précédentes ou selon le préambule de la revendication 1, **caractérisé en ce qu'**au moins un canal d'entrée (2a, 2b) est prévu avec au moins une surface de paroi plane dans le plan de laquelle se situent l'ouverture de sortie d'une soupape d'entrée (4-9) réalisée sous la forme d'une soupape à pointeau et, lorsque la soupape d'entrée est fermée, la surface frontale (48) du pointeau de soupape (47) de la soupape d'entrée.

10. Agencement de soupapes selon la revendication 9, **caractérisé en ce que** le canal d'entrée (2a, 2b) présente une section transversale au moins approximativement polygonale avec au moins deux surfaces de paroi planes pour des soupapes d'entrée (4-9) réalisées sous la forme d'une soupape à pointeau.

11. Agencement de soupapes selon l'une des revendications précédentes, **caractérisé en ce que** sont prévus deux canaux d'entrée (2a, 2b) avec de préférence au moins une section transversale approximativement polygonale qui s'étendent sur des côtés opposés l'un à l'autre d'un plan dans lequel se trouve le canal de collecte (11) commun aux composants.

12. Agencement de soupapes selon l'une des revendications 8 à 11, **caractérisé en ce que** le canal menant à travers la pièce de liaison entre les deux corps de boîtier (20a, 20b, 20c) passe, dans la pièce de liaison, d'une forme polygonale de sa section transversale à une forme circulaire de sa section transversale.

13. Agencement de soupapes en particulier selon la revendication 1 pour milieux fluides comportant un boîtier (1) dans lequel mènent des conduites d'entrée (34-39) pour les fluides, comportant des soupapes à pointeau (4-9) commandées, disposées dans le boîtier, pour l'ouverture et la fermeture des conduites d'entrée et comportant un canal (2a, 2b) disposé dans le boîtier (1), au droit des sorties des soupapes à pointeau, pour les fluides, **caractérisé en ce que** le canal (2a, 2b) présente une section transversale au moins approximativement polygonale et au moins trois surfaces de paroi planes coudées l'une par rapport à l'autre dans le plan de chacune desquelles se trouve l'une des soupapes à pointeau (4-9) et, lorsque la soupape est fermée, la surface frontale (48) plane du pointeau de soupape (47).

14. Agencement de soupapes selon l'une des revendications 10 à 12, **caractérisé en ce que** les axes des pointeaux des soupapes à pointeau (4-9) disposées sur les surfaces de paroi planes se situent dans un plan commun s'étendant perpendiculairement à l'axe longitudinal du canal d'entrée (2a, 2b) polygonal.

15. Agencement de soupapes en particulier selon l'une des revendications précédentes avec deux canaux de liaison (70a, 70b) séparés l'un de l'autre, débouchant dans un canal de collecte (71) qui leur est commun, pour des fluides à mélanger entre eux, dont les axes longitudinaux (77a, 77b) forment entre eux, au droit du point d'embouchure (72), un angle inférieur à 90°, **caractérisé en ce que** la surface de la section transversale d'au moins un ou de chaque canal de liaison (70a, 70b) est rétrécie dans la zone située devant le point d'embouchure (72) pour former un rétrécissement augmentant la vitesse d'écoulement, et/ou l'angle formé par les axes longitudinaux (76a, 76b ; 77a, 77b) des canaux de liaison (70a, 70b) varie dans la zone située devant le point d'embouchure (72).

16. Agencement de soupapes selon la revendication 15, **caractérisé en ce que** le ou chaque canal de liaison (70a, 70b) possède, dans la zone située devant le point d'embouchure (72), des segments (76, 77) se prolongeant l'un l'autre avec des axes longitudinaux (76a, 76b) rectilignes.

17. Agencement de soupapes selon la revendication 16, **caractérisé en ce que** le segment (77) côté embouchure possède une plus petite section d'écoulement que l'autre segment (76).

18. Agencement de soupapes selon la revendication 16 ou 17, **caractérisé en ce que** l'angle que forment les axes longitudinaux (77a, 77b) des deux canaux de liaison (70, 70b), immédiatement avant le point d'embouchure (72), est inférieur à l'angle compris entre les axes longitudinaux (76a, 76b) des segments de canal (76) situés en amont d'un coude.

19. Agencement de soupapes selon la revendication 18, **caractérisé en ce qu'**un angle est environ égal à 30° et l'autre angle environ égal à 45°.

20. Agencement de soupapes selon l'une des revendications 15 à 19, **caractérisé en ce que** les canaux de liaison (70a, 70b) se situent dans un plan dans la zone située en amont du point d'embouchure (72).
